# FASCICULE DE BREVET EUROPEEN

(11) **EP 4 242 478 B1**
(45) Date de publication et mention de la délivrance du brevet: **06.05.2026**
(21) Numéro de dépôt: 23160854.8
(22) Date de dépôt: 09.03.2023
(51) Int. Cl.: F16C 3/08, F16C 3/14, F16C 3/20, F16C 3/18

(54) **VILEBREQUIN À RÉDUCTION DES CHOCS DANS L HUILE**
KURBELWELLE MIT REDUZIERTEM ÖLSCHLAG
CRANKSHAFT WITH REDUCED OIL SHOCKS

(30) Priorité: 09.03.2022 FR 2202075
(43) Date de publication de la demande: 13.09.2023
(73) Titulaire: Renault s.a.s, 92100 Boulogne Billancourt (FR)
(72) Inventeur: Carbon, Alain, 78084 Guyancourt (FR); Fradet, Valentin, 78084 Guyancourt (FR)
(74) Mandataire: Elzaburu S.L.P.

(56) Documents cités:
- WO-A1-2021/201740
- JP-A- 2004 197 897
- JP-B2- 4 865 774

## Description

La présente invention concerne le domaine des vilebrequins pour moteurs thermiques, et plus particulièrement de tels vilebrequins qui sont configurés pour diminuer des frottements avec une réserve d'huile du moteur thermique.

Les moteurs thermiques ou moteurs à combustion interne des véhicules automobiles comprennent généralement un boîtier ou carter à l'intérieur duquel est disposé le vilebrequin. Ce vilebrequin entraîne en rotation des bielles, des pistons ou d'autres éléments du moteur thermique. Le vilebrequin comprend des paliers de rotation ainsi que des manetons reliés aux paliers de rotation par des bras de manivelle. Ces bras de manivelle du vilebrequin sont généralement équipés, à une de leurs extrémités, de contrepoids qui constituent des masses d'équilibrage destinées à permettre l'équilibrage de l'équipage mobile du moteur thermique.

Une portion du carter constitue en outre un réservoir de stockage pour de l'huile destinée à lubrifier le moteur. Lors des accélérations et des freinages du véhicule automobile, ou encore lorsque celui-ci se déplace dans un virage, le volume d'huile contenu dans le réservoir de stockage se déplace. Certains éléments du vilebrequin, en particulier les contrepoids, percutent alors l'huile contenue dans le carter.

Un tel choc entre les contrepoids et l'huile provoque des phénomènes d'émulsion pouvant perturber une pression interne du moteur thermique ainsi que la décantation des vapeurs d'huile, risquant alors d'atténuer des effets de lubrification et de refroidissement autrement assurés par cette huile. Par ailleurs, ces chocs génèrent des pertes hydrodynamiques, qui varie en fonction de la fluidité de l'huile.

Il existe dans l'art antérieur des solutions ayant pour effet de diminuer les frottements entre le vilebrequin et l'huile contenue dans le réservoir de stockage. Il est ainsi connu de recouvrir certaines pièces avec un matériau ou revêtement présentant des propriétés de réduction des frottements.

Ces solutions ne permettent cependant pas d'amortir les chocs causés par la collision des contrepoids avec l'huile.

WO 2021/201740 A1 divulgue un vilebrequin selon le préambule de la revendication 1. JP 2004 197897 A et JP 4 865774 B2 divulguent chacun un vilebrequin n'ayant une forme que sur une seule face.

La présente invention vise à pallier cet inconvénient en proposant un vilebrequin dont les contrepoids sont configurés pour réduire ces chocs avec l'huile contenue dans le réservoir de stockage.

La présente invention a ainsi pour principal objet un vilebrequin d'un moteur thermique selon la revendication 1.

Le vilebrequin selon l'invention permet ainsi de réduire les chocs de son contrepoids à l'entrée dans l'huile du moteur thermique, grâce à la présence de la forme spécifique du contrepoids. Ce contrepoids correspond à une masse d'équilibrage, dont le but est d'équilibrer dynamiquement le vilebrequin lorsque celui-ci effectue une rotation autour de l'axe de rotation. En effet, un mouvement des éléments constitutifs du vilebrequin lors de sa rotation génère des forces, que le contrepoids permet de réduire voire d'annuler.

L'axe de rotation du vilebrequin et l'axe du maneton sont des axes distincts l'un de l'autre et parallèles l'un par rapport à l'autre.

Le contrepoids présente une première extrémité qui correspond au bord d'entrée et une deuxième extrémité qui correspond au bord de sortie. La forme configurée pour réduire les chocs donne au contrepoids une forme hydrodynamique. Elle est par exemple obtenue par matriçage. Elle s'étend à partir du bord d'entrée et en direction du bord de sortie. Elle s'étend sur un angle supérieur à 20 % du secteur angulaire, c'est-à-dire sur au moins 20 % d'une distance mesurée entre le bord d'entrée et le bord de sortie, à partir du bord d'entrée.

Selon une caractéristique non revendiquée de l'invention, la forme est un biseau qui s'étend à partir du bord d'entrée et en direction du bord de sortie.

On comprend ici que la forme configurée pour réduire les chocs présente au moins une paroi oblique, qui permet une entrée du bord d'entrée dans l'huile limitant les chocs. Selon une autre caractéristique non revendiquée de l'invention, la face sur laquelle s'étend la forme est disposée sur un côté du bras de manivelle qui porte le maneton.

Selon une caractéristique non revendiquée de l'invention, la face sur laquelle s'étend la forme est disposée sur un côté du bras de manivelle qui porte le palier de rotation. Cette face s'étend majoritairement de manière perpendiculaire à l'axe de rotation du vilebrequin.

Selon une autre caractéristique de l'invention, la face disposée sur le côté du bras de manivelle qui porte le maneton est une première face et la face disposée sur le côté du bras de manivelle qui porte le palier de rotation est une deuxième face, le contrepoids comprenant une première forme disposée sur la première face et une deuxième forme disposée sur la deuxième face.

Le bras de manivelle présente ainsi deux faces, parmi lesquelles une première face disposée du côté du maneton et une deuxième face disposée du côté du palier de rotation. Ces deux faces sont donc opposées l'une à l'autre et sensiblement parallèles. La forme configurée pour réduire les chocs peut être disposée soit sur la première face, soit sur la deuxième face, soit sur ces deux faces à la fois. Pour le mode de réalisation dans lesquelles la première face et la deuxième face portent toutes deux une forme configurée pour réduire les chocs, il y a alors une première forme sur la première face et une deuxième forme sur la deuxième face.

Selon une caractéristique non revendiquée, la première face et la deuxième face définissent une épaisseur du contrepoids, le biseau s'étendant à partir du bord d'entrée et en direction du bord de sortie en augmentant son épaisseur.

Cette épaisseur peut être mesurée parallèlement à l'axe de rotation du vilebrequin. Le biseau correspond à une réduction de cette épaisseur à partir du bord d'entrée ; ainsi, l'épaisseur du contrepoids est moindre lorsque qu'elle est mesurée au voisinage du bord d'entrée, par comparaison à une mesure de cette épaisseur au voisinage du bord de sortie.

Selon une caractéristique de l'invention, la première forme et la deuxième forme délimitent un cône dont un sommet correspond au bord d'entrée.

En d'autres termes, lorsqu'à la fois la première face et la deuxième face présentent la forme configurée pour réduire les chocs, une section du biseau vue depuis un plan du bord d'entrée jusqu'au bord de sortie est sensiblement en forme de triangle, le sommet de ce triangle étant le bord d'entrée.

Selon une autre caractéristique de l'invention, la forme s'étend à partir du bord d'entrée sur un angle compris entre 20 % et 50 % du secteur angulaire.

On comprend ici que la forme configurée pour réduire les chocs constitue au maximum une moitié d'un secteur angulaire du contrepoids, mesurée de son bord d'entrée à son bord de sortie.

Selon une caractéristique de l'invention, le bord d'entrée et le bord de sortie sont joints par un bord arrondi, la forme s'étendant à partir de ce bord arrondi en direction de l'axe de rotation.

Le bord d'entrée est donc relié au bord de sortie par ce bord arrondi. Celui-ci s'étend sensiblement le long du secteur angulaire. La forme configurée pour réduire les chocs s'étend donc ici au droit du secteur angulaire.

Selon une caractéristique, le bord arrondi s'inscrivant dans un cercle dont le centre est l'axe de rotation du vilebrequin, la forme présentant une dimension mesurée le long du rayon dudit cercle à partir du bord arrondi comprise entre 0 et 70 % du rayon dudit cercle.

L'invention concerne en outre un moteur thermique comprenant un vilebrequin tel qu'évoqué précédemment et un carter destiné à contenir une réserve d'huile, le vilebrequin étant configuré pour baigner au moins partiellement dans la réserve d'huile.

Le moteur thermique selon l'invention est par exemple un moteur thermique de véhicule automobile. C'est plus précisément le contrepoids du vilebrequin qui baigne dans l'huile, notamment lorsque le véhicule automobile accélère, freine ou lorsqu'il se déplace dans un virage.

Selon une caractéristique de l'invention, le vilebrequin tourne selon un sens de rotation, le bord d'entrée étant le bord qui pénètre en premier dans la réserve d'huile selon ce sens de rotation.

D'autres caractéristiques, détails et avantages de l'invention ressortiront plus clairement à la lecture de la description qui suit d'une part, et d'exemples de réalisation donnés à titre indicatif et non limitatif en référence aux dessins annexés d'autre part, sur lesquels :
[Fig. 1] illustre, schématiquement, un vilebrequin selon l'invention, selon une vue de coupe ;
[Fig. 2] illustre, schématiquement, une portion du vilebrequin de la figure 1.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

Sur les figures, les éléments communs à plusieurs figures conservent la même référence.

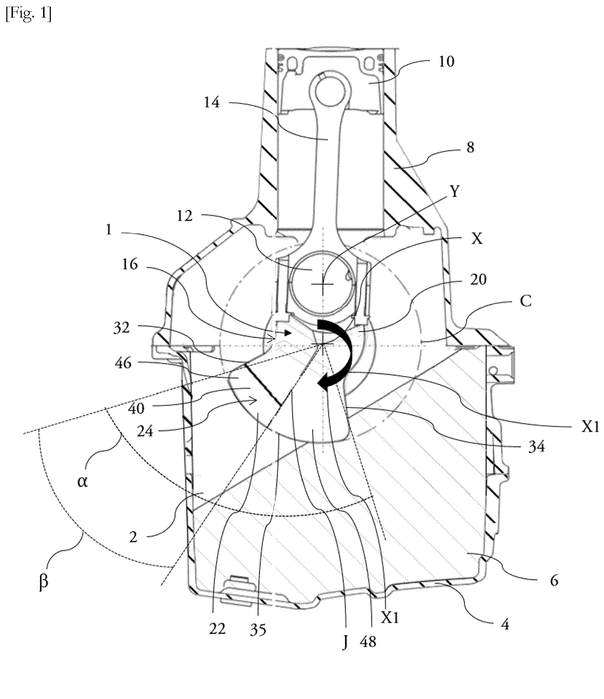

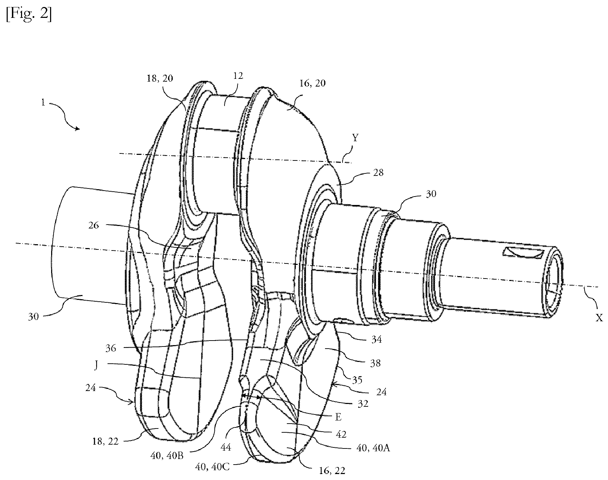

La figure 1 illustre ainsi, schématiquement, des éléments d'un moteur thermique d'un véhicule automobile parmi lesquels on trouve au moins un carter 4 et un vilebrequin 1 selon l'invention, qui s'étend le long d'un axe de rotation X autour duquel il tourne lorsqu'il est en fonctionnement, selon un sens de rotation X1. Le vilebrequin 1 est ici disposé au moins en partie au sein d'un logement interne 2 d'un carter 4 du moteur thermique. Ce carter 4 constitue une réserve d'huile 6 qui est utilisée pour lubrifier le moteur thermique.

Le moteur thermique comprend, à l'opposé de la réserve d'huile 6, un bloc cylindres 8 au sein duquel se déplace au moins un piston 10. Ce piston 10 coulisse dans un cylindrique selon un mouvement de va-et-vient. Le piston 10 est connecté à un maneton 12 du vilebrequin 1 par l'intermédiaire d'une bielle 14, cette bielle 14 étant reliée au piston 10 par une première de ses extrémités et au maneton 12 par une deuxième de ses extrémités. Le maneton 12 s'étend autour d'un axe Y distinct de l'axe de rotation X du vilebrequin 1. L'axe Y du maneton 12 et l'axe de rotation X du vilebrequin 1 sont ici parallèles.

En plus du maneton 12, le vilebrequin 1 comporte au moins deux bras de manivelle 16, 18, parmi lesquels un premier bras de manivelle 16 et un deuxième bras de manivelle 18.

Seul le premier bras de manivelle 16 est représenté à la figure 1, tandis que les deux bras de manivelle 16, 18 sont visibles en figure 2.

Tel que visible sur cette figure 2, chacun des bras de manivelle 16, 18 présente une première extrémité 20 et une deuxième extrémité 22, ces extrémités 20, 22 étant de part et d'autre de l'axe de rotation X du vilebrequin 10. Le maneton 12 s'étend axialement entre la première extrémité 20 du premier bras de manivelle 16 et la deuxième extrémité 20 du deuxième bras de manivelle 18. On comprend ainsi que l'axe Y du maneton passe à la fois par la première extrémité 20 du premier bras de manivelle 16 et par la première extrémité 20 du deuxième bras de manivelle 18.

Les deuxièmes extrémités 22 des bras de manivelle 16, 18 sont équipées de masses d'équilibrage ou contrepoids 24, qui ont pour rôle un équilibrage dynamique du vilebrequin 1 et/ou de l'équipage mobile du moteur thermique, lorsque celui-ci est entraîné en rotation autour de l'axe de rotation X. Un contrepoids 24 est disposé sur le bras de manivelle 16, 18 à l'opposé du maneton 12.

Un bras de manivelle 16, 18 est délimité axialement par un premier côté 26 et par un deuxième côté 28. Le maneton 12 est disposé entre le premier côté 26 du premier bras de manivelle 16 et le premier côté 26 du deuxième bras de manivelle 18. Un palier de rotation 30 du vilebrequin fait saillie du deuxième côté 28 d'un des bras de manivelle 16, 18. En d'autres termes, le premier côté 26 des bras de manivelle correspond à un côté qui porte le maneton 12 tandis que leur deuxième côté 28 est celui qui porte le palier de rotation 30.

Comme représenté ici, le vilebrequin 1 peut comprendre plusieurs paliers de rotation 30, chacun de ces paliers de rotation 1 étant alors séparé d'un maneton 12 par un bras de manivelle 16, 18. Le palier de rotation 30 est centré sur de l'axe de rotation X du vilebrequin 1. Le vilebrequin 1 comprend également plusieurs manetons 12 chacun excentré par rapport à l'axe de rotation X du palier de rotation 30. Les premières extrémités 20 et les deuxièmes extrémités 22 des bras de manivelle 16, 18 sont disposées sensiblement à équidistance de l'axe de rotation X du vilebrequin 1 selon l'invention.

Comme cela est visible en figure 1, le vilebrequin 1 est configuré pour baigner, au moins partiellement, dans la réserve d'huile 6 contenue dans le carter 4. Plus précisément, le vilebrequin 1 baigne dans la réserve d'huile 6 notamment lorsque le véhicule automobile qu'il équipe accélère, lorsqu'il freine ou lorsqu'il se déplace dans un virage. Au sein du vilebrequin 1, c'est plus particulièrement le contrepoids 24 qui est destiné à entrer en contact avec l'huile.

Le contrepoids 24 va maintenant être décrit plus en détail en relation avec le premier bras de manivelle 16, mais on comprend qu'il existe un contrepoids 24 pour ce premier bras de manivelle 16 et un autre contrepoids 24 pour le deuxième bras de manivelle 18, chaque contrepoids 24 étant tel que décrit ci-dessous.

Le contrepoids 24 est séparé en une première portion 46 et une deuxième portion 48 par une ligne de démoulage J qui correspond sensiblement à son plan médian, l'axe de rotation X du vilebrequin 1 s'inscrivant dans ce plan. Une extrémité de la première portion 46 du contrepoids 24 ou première extrémité correspond à un bord d'entrée 32 dans la réserve d'huile 6, tandis qu'une extrémité de la deuxième portion 48 de ce contrepoids ou deuxième extrémité correspond à un bord de sortie 34. Bord d'entrée 32 et bord de sortie 34 sont donc disposés chacun d'un côté de la ligne de démoulage J. Le bord d'entrée 32 dans la réserve d'huile 6 est le bord du contrepoids 24 qui pénètre en premier dans cette réserve d'huile 6 lorsque le vilebrequin tourne autour de l'axe de rotation X, selon son sens de rotation X1.

Le contrepoids 24 s'étend sur un secteur angulaire α, ce secteur angulaire α étant défini par un cercle C dont un centre correspond à l'axe de rotation X. Ce secteur angulaire α est délimité par le bord d'entrée 32 d'une part ainsi que par le bord de sortie 34 d'autre part.

Le bord d'entrée 32 est relié au bord de sortie 34 par un bord arrondi 35 qui épouse la partie du cercle C qui forme le secteur angulaire α. Ce bord arrondi 35 s'étend entre le bord d'entrée 32 et le bord de sortie 34 le long du secteur angulaire α. On comprend que le bord arrondi 35 s'inscrit dans le cercle C dont le centre correspond à l'axe de rotation X du vilebrequin 1.

Tel que visible sur la figure 2, le contrepoids 24 présente une première face 36 et une deuxième face 38 reliant le bord d'entrée 32 au bord de sortie 34. Ces première et deuxième faces 36, 38 sont sensiblement parallèles l'une à l'autre. Elles sont sécantes de l'axe de rotation X du vilebrequin 1, notamment en s'inscrivant dans des plans perpendiculaires, ou sensiblement perpendiculaires, à cet axe. La première face 36 est disposée sur le contrepoids 24 du premier côté 26 du premier bras de manivelle 16 et la deuxième face 38 est disposée du deuxième côté 28. On comprend ainsi que la première face 36 du contrepoids 24 est du côté du maneton 12 tandis que sa deuxième face 38 est du côté du palier de rotation 30. Première face 36 et deuxième face 38 sont jointes, au niveau de la deuxième extrémité 22 du premier bras de manivelle 16, par le bord arrondi 35.

Selon l'invention, le contrepoids 24 comprend au moins une forme 40 configurée pour réduire des chocs à l'entrée du bord d'entrée 32 dans la réserve d'huile 6, une telle forme 40 résultant par exemple d'un matriçage du contrepoids 4 du vilebrequin 1. Cette forme 40 configurée pour réduire les chocs s'étend à partir du bord d'entrée 32 et en direction du bord de sortie 34. Plus précisément et comme visible à la figure 1, la forme 40 configurée pour réduire les chocs s'étend à partir du bord d'entrée 32 et sur un angle β supérieur à 20 % du secteur angulaire α ; on comprend ici que la forme 40 configurée pour réduire les chocs s'étend sur une distance mesurée à partir du bord d'entrée 32 le long du secteur angulaire α, une telle distance correspondant à au moins 20 % de ce secteur angulaire α.

Selon les modes de réalisation, la forme 40 configurée pour réduire les chocs s'étend à partir du bord d'entrée 32 sur un angle β correspondant à entre 20 % et 50 % du secteur angulaire α. On comprend ici que cette forme 40 configurée pour réduire les chocs s'étend au plus sur une moitié du contrepoids 24, cette moitié étant mesurée entre le bord d'entrée 32 et le bord de sortie 34 le long du bord arrondi 35. En d'autres termes, la forme 40 configurée pour réduire les chocs s'étend alors depuis le bord d'entrée 32 jusqu'à la ligne de démoulage J.

En outre, la forme 40 configurée pour réduire les chocs peut selon différents modes de réalisation être disposée soit sur la première face 36 du contrepoids 24, soit sur la deuxième face 38 du contrepoids 24, soit à la fois sur la première face 36 et la deuxième face 38 de ce contrepoids 24.

En d'autres termes, la forme 40 configurée pour réduire les chocs peut être disposée soit du premier côté 26 du premier bras de manivelle 16, c'est-à-dire celui qui porte le maneton 12, soit de son deuxième côté 28, c'est-à-dire celui qui porte le palier de rotation 30, soit à la fois sur ce premier côté 26 et ce deuxième côté 28.

La forme 40 ménagée sur le premier côté 26 du premier bras de manivelle 16 s'étend dans un plan sécant au plan dans lequel s'inscrit la première face 36 du contrepoids 24, en formant un angle compris entre ZZ° et WW°.

La forme 40 ménagée sur le deuxième côté 28 du premier bras de manivelle 16 s'étend dans un plan sécant au plan dans lequel s'inscrit la deuxième face 38 du contrepoids 24, en formant un angle compris de manière non limitative par exemple entre 10° et 30°.

Pour les modes de réalisation dans lesquels la forme 40 configurée pour réduire les chocs est présente à la fois sur la première face 36 et sur la deuxième face 38, il existe donc une première forme 40A configurée pour réduire les chocs sur la première face 36 et une deuxième forme 40B configurée pour réduire les chocs sur la deuxième face 38 du contrepoids 24. Première forme 40A et deuxième forme 40B se combinent l'une avec l'autre pour réduire les chocs au contact de l'huile.

Le plan dans lequel s'inscrit la première forme 40A et le plan dans lequel s'inscrit la deuxième forme 40B sont sécants selon un angle compris par exemple entre 20 et 60°.

La première face 36 et la deuxième face 38 du contrepoids 24 définissent entre elles une épaisseur E de ce contrepoids 24, cette épaisseur E étant mesurée selon une direction parallèle à l'axe de rotation X du vilebrequin. La forme 40 configurée pour réduire les chocs est par exemple un biseau. Ce biseau comprend une paroi oblique 42 qui s'étend à partir du bord d'entrée 32 et en direction du bord de sortie 34. Ainsi, la forme 40 configurée pour réduire les chocs est telle qu'une épaisseur E du contrepoids 24 mesurée au voisinage du bord d'entrée 32 est inférieure à une épaisseur E de ce contrepoids 24 mesurée au voisinage du bord de sortie 34, ou au voisinage de la ligne de démoulage J.

Lorsque le contrepoids 24 présente à la fois une première forme 40A et une deuxième forme 40B configurées pour réduire les chocs, ces deux formes 40A, 40B délimitent un cône dont un sommet 44 correspond à une ligne du bord d'entrée 32. Il en résulte qu'une section de ces formes 40A, 40B configurées pour réduire les chocs effectuée le long du bord arrondi 35 du contrepoids 24 est en forme de triangle isocèle, un sommet principal de ce triangle isocèle correspondant au sommet 44 du cône.

La forme 40 configurée pour réduire les chocs du contrepoids 24 peut en outre s'apparenter à une troisième forme 40C qui s'étend à partir du bord arrondi 35 et en direction de l'axe de rotation X du vilebrequin 1.

Ainsi et comme particulièrement visible en figure 2, la troisième forme 40C forme un évasement qui débute au bord arrondi 35 en s'ouvrant vers l'axe de rotation X du vilebrequin 1. La troisième forme 40C configurée pour réduire les chocs présente une épaisseur E du contrepoids 24 plus petite lorsqu'elle est mesurée au niveau du bord arrondi 35 que lorsqu'elle est mesurée en un autre point plus proche l'axe de rotation X du vilebrequin 1. En d'autres termes, cette troisième forme 40C configurée pour réduire les chocs constitue une réduction de l'épaisseur E du vilebrequin au voisinage du bord arrondi 35.

Comme évoqué précédemment, ce bord arrondi 35 s'inscrit dans le cercle C dont le centre est l'axe de rotation X du vilebrequin **1,** dont le rayon dépend du dimensionnent du moteur lui-même, notamment de la course des pistons. La troisième forme 40C configurée pour réduire les chocs présente alors une dimension, mesurée le long de ce rayon et à partir du bord arrondi 35, qui est comprise entre 0 et 70 % de ce rayon, à partir du centre du cercle C.

La présente invention propose ainsi un vilebrequin dont un choc avec l'huile d'un moteur thermique est réduit du fait de la forme particulière de son contrepoids, qui est configurée pour faciliter l'entrée du contrepoids dans la réserve d'huile, par exemple en coupant le film d'huile au moyen de la forme 40, 40A, 40B, 40C configurée pour réduire les chocs.

La présente invention ne saurait toutefois se limiter aux moyens et configurations décrits et illustrés ici et elle s'étend également à tout moyen et toute configuration équivalents ainsi qu'à toute combinaison techniquement opérante de tels moyens.

Elle inclut notamment un mode de réalisation perfectionné, non représenté sur les figures, dans lequel une forme additionnelle est configurée pour limiter la traînée à la sortie du bord de sortie d'huile, cette forme s'étendant sur au moins une face du contrepoids, sécante à l'axe de rotation du vilebrequin, à partir du bord de sortie, et sur un angle supérieur également à 20 % du secteur angulaire sur lequel s'étend le contrepoids.

## Revendications

1. Vilebrequin (1) d'un moteur thermique s'étendant le long d'un axe de rotation (X) et comprenant au moins un palier de rotation (30), au moins un maneton (12) et au moins deux bras de manivelle (16, 18), le maneton (12) s'étendant autour d'un axe (Y) distinct de l'axe de rotation (X), les bras de manivelle (16, 18) présentant chacun une première extrémité (20) et une deuxième extrémité (22), le maneton (12) étant disposé axialement entre les premières extrémités (20) des bras de manivelle (16, 18), les deuxièmes extrémités (22) des bras de manivelle (16, 18) étant équipées chacune d'un contrepoids (24), au moins un contrepoids (24) étant destiné à baigner au moins partiellement dans de l'huile du moteur thermique, ce contrepoids (24) s'étendant sur un secteur angulaire (α) entre un bord d'entrée (32) dans l'huile et un bord de sortie (34) d'huile, le contrepoids (24) comprenant au moins une forme (40) configurée pour réduire des chocs à l'entrée du bord d'entrée (32) dans l'huile, ladite forme (40, 40A, 40B, 40C) s'étendant sur au moins une face (36, 38) du contrepoids (24) sécante de l'axe de rotation (X), à partir du bord d'entrée (32) et sur un angle (β) supérieur à 20 % du secteur angulaire (α), vilebrequin dans lequel la face (36, 38) disposée sur le côté (26) du bras de manivelle (16, 18) qui porte le maneton (12) est une première face (36) et la face (36, 38) disposée sur le côté du bras de manivelle (16, 18) qui porte le palier de rotation (30) est une deuxième face (38), le contrepoids (24) comprenant une première forme (40A) disposée sur la première face (36) et une deuxième forme (40B) disposée sur la deuxième face (38), **caractérisé en ce que** première forme (40A) et la deuxième forme (40B) délimitent un cône dont un sommet (44) correspond au bord d'entrée (32).

2. Vilebrequin (1) selon la revendication 1, dans lequel la forme (40, 40A, 40B, 40C) s'étend à partir du bord d'entrée (32) sur un angle (β) compris entre 20 % et 50 % du secteur angulaire (α).

3. Vilebrequin (1) selon l'une quelconque des revendications précédentes, dans lequel le bord d'entrée (32) et le bord de sortie (34) sont joints par un bord arrondi (35), la forme (40) s'étendant à partir de ce bord arrondi (35) en direction de l'axe de rotation (X).

4. Vilebrequin (1) selon la revendication précédente, dans lequel, le bord arrondi (35) s'inscrivant dans un cercle (C) dont le centre est l'axe de rotation (X) du vilebrequin (1), la forme (40, 40A, 40B, 40C) présentant une dimension mesurée le long du rayon dudit cercle à partir du bord arrondi (35) comprise entre 0 et 70 % du rayon dudit cercle (C).

5. Moteur thermique comprenant un vilebrequin (1) selon l'une quelconque des revendications précédentes et un carter (4) destiné à contenir une réserve d'huile (6), le vilebrequin (1) étant configuré pour baigner au moins partiellement dans la réserve d'huile (6).

6. Moteur thermique selon la revendication précédente, dans lequel le vilebrequin (1) tourne selon un sens de rotation (X1), le bord d'entrée (32) étant le bord qui pénètre en premier dans la réserve d'huile (6) selon ce sens de rotation (X1).

## Patentansprüche

1. Kurbelwelle (1) eines sich entlang einer Drehachse (X) erstreckenden Verbrennungsmotors mindestens ein Drehlager (30), mindestens einen Kurbelzapfen (12) und mindestens zwei Kurbelarme (16, 18) umfassend, wobei sich der Kurbelzapfen (12) um eine von der Drehachse (X) verschiedene Achse (Y) erstreckt, wobei die Kurbelarme (16, 18) jeweils ein erstes Ende (20) und ein zweites Ende (22) aufweisen, wobei der Kurbelzapfen (12) axial zwischen den ersten Enden (20) der Kurbelarme (16, 18) angeordnet ist, wobei die zweiten Enden (22) der Kurbelarme (16, 18) jeweils mit einem Gegengewicht (24) ausgestattet sind, wobei mindestens ein Gegengewicht (24) ausgelegt ist, mindestens teilweise in das Öl des Verbrennungsmotors einzutauchen, wobei sich dieses Gegengewicht (24) über einen Winkelabschnitt (α) zwischen einer Einlasskante (32) des Öls und einer Auslasskante (34) des Öls erstreckt, wobei das Gegengewicht (24) mindestens eine Form (40) aufweist, die konfiguriert ist, Stöße am Einlass der Einlasskante (32) im Öl zu reduzieren, wobei sich die Form (40, 40A, 40B, 40C) über mindestens eine Fläche (36, 38) des Gegengewichts (24), die die Drehachse (X) schneidet, von der Einlasskante (32) und über einen Winkel (β) von mehr als 20 % des Winkelbereichs (α) erstreckt, Kurbelwelle, bei der
die auf der den Kurbelzapfen (12) tragenden Seite (26) des Kurbelarms (16, 18) angeordnete Fläche (36, 38) eine erste Fläche (36) und die auf der das Drehlager (30) tragenden Seite des Kurbelarms (16, 18) angeordnete Fläche (36, 38) eine zweite Fläche (38) ist, wobei das Gegengewicht (24) eine auf der ersten Fläche (36) angeordnete erste Form (40A) und eine auf der zweiten Fläche (38) angeordnete zweite Form (40B) aufweist, **dadurch gekennzeichnet,**
**dass** die erste Form (40A) und die zweite Form (40B) einen Kegel begrenzen, dessen Spitze (44) der Einlasskante (32) entspricht.

2. Kurbelwelle (1) nach Anspruch 1, wobei sich die Form (40, 40A, 40B, 40C) von der Einlasskante (32) um einen Winkel (β) zwischen 20 % und 50 % des Winkelsektors (α) erstreckt.

3. Kurbelwelle (1) nach einem der vorhergehenden Ansprüche, wobei die Einlasskante (32) und die Auslasskante (34) durch eine abgerundete Kante (35) verbunden sind, wobei sich die Form (40) von dieser abgerundeten Kante (35) in Richtung der Drehachse (X) erstreckt.

4. Kurbelwelle (1) nach dem vorhergehenden Anspruch, wobei die abgerundete Kante (35) in einen Kreis (C) eingeschrieben ist, dessen Mittelpunkt die Drehachse (X) der Kurbelwelle (1) ist, wobei die Form (40, 40A, 40B, 40C) eine Abmessung aufweist, die entlang des Radius des Kreises von der abgerundeten Kante (35) zwischen 0 und 70 % des Radius des Kreises (C) gemessen wird.

5. Verbrennungsmotor mit einer Kurbelwelle (1) nach einem der vorhergehenden Ansprüche und einem Kurbelgehäuse (4) zur Aufnahme eines Ölbehälters (6), wobei die Kurbelwelle (1) konfiguriert ist, mindestens teilweise in den Ölbehälter einzutauchen (6).

6. Verbrennungsmotor nach dem vorhergehenden Anspruch, bei dem sich die Kurbelwelle (1) in einer Drehrichtung (X1) dreht, wobei die Einlasskante (32) die Kante ist, die zuerst in den Ölbehälter (6) in dieser Drehrichtung (X1) eindringt.

## Claims

1. Crankshaft (1) of a heat engine extending along a rotation axis (X) and comprising at least one rotation bearing (30), at least one crank pin (12) and at least two crank arms (16, 18), the crank pin (12) extending around an axis (Y) distinct from the rotation axis (X), the crank arms (16, 18) each having a first end (20) and a second end (22), the crank pin (12) being arranged axially between the first ends (20) of the crank arms (16, 18), the second ends (22) of the crank arms (16, 18) being each equipped with a counterweight (24), at least one counterweight (24) being intended to be at least partially immersed in the oil of the heat engine, this counterweight (24) extending over an angular sector (α) between an inlet edge (32) in the oil and an outlet edge (34) of oil, the counterweight (24) comprising at least one shape (40) configured to reduce shocks at the inlet of the inlet edge (32) in the oil, said shape (40, 40A, 40B, 40C) extending on at least one face (36, 38) of the counterweight (24) secant to the rotation axis (X), from the inlet edge (32) and over an angle (β) greater than 20% of the angular sector (α), " crankshaft wherein
the face (36, 38) arranged on the side (26) of the crank arm (16, 18) that carries the crank pin (12) is a first face (36) and the face (36, 38) arranged on the side of the crank arm (16, 18) that carries the rotation bearing (30) is a second face (38), the counterweight (24) comprising a first shape (40A) arranged on the first face (36) and a second shape (40B) arranged on the second face (38), **characterised in that**
the first shape (40A) and the second shape (40B) delineate a cone, an apex (44) of which corresponds to the inlet edge (32).

2. Crankshaft (1) according to claim 1, wherein the shape (40, 40A, 40B, 40C) extends from the input edge (32) over an angle (β) comprised between 20% and 50% of the angular sector (α).

3. Crankshaft (1) according to any one of the preceding claims, wherein the input edge (32) and the output edge (34) are joined by a rounded edge (35), the shape (40) extending from this rounded edge (35) in the direction of the rotation axis (X).

4. Crankshaft (1) according to the preceding claim, wherein the rounded edge (35) fits into a circle (C) whose centre is the rotation axis (X) of the crankshaft (1), the shape (40, 40A, 40B, 40C) having a dimension measured along the radius of said circle from the rounded edge (35) of between 0 and 70% of the radius of said circle (C).

5. Heat engine comprising a crankshaft (1) according to any one of the preceding claims and a crankcase (4) for containing an oil reserve (6), the crankshaft (1) being configured to at least partially bathe in the oil reserve (6).

6. Heat engine according to the preceding claim, wherein the crankshaft (1) rotates in a rotation direction (X1), the inlet edge (32) being the edge that first enters the oil reserve (6) in this rotation direction (X1).
